# NEUE EUROPÄISCHE PATENTSCHRIFT

(11) **EP 0 249 592 B2**
(45) Veröffentlichungstag und Bekanntmachung des Hinweises auf die Entscheidung über den Einspruch: **19.04.2000**
(45) Hinweis auf die Patenterteilung: 03.11.1993
(21) Anmeldenummer: 87890134.7
(22) Anmeldetag: 12.06.1987
(51) Int. Cl.: B29C 53/06, B44C 5/04, B32B 1/00, B32B 27/04

(54) **Kunstharz-Schichtpressstoffplatte die für die Herstellung eines Bauteils mit zumindest einem gerundeten Oberflächenbereich geeignet ist**
Polymer pressure laminate for making a building element having a bended part
Panneau comprimé multicouche en matières synthétiques pour la fabrication d'un élément de construction ayant une partie courbée

(30) Priorität: 12.06.1986 AT 159086
(43) Veröffentlichungstag der Anmeldung: 16.12.1987
(73) Patentinhaber: ISOVOLTA Österreichische Isolierstoffwerke Aktiengesellschaft, 2355 Wiener Neudorf (AT)
(72) Erfinder: Petershofer, Georg, Dr., A-2351 Wiener Neudorf (AT); Felzmann, Horst, A-1140 Wien (AT)
(74) Vertreter: Dungler, Karin

(56) Entgegenhaltungen:
- EP-A- 0 015 316
- EP-A- 0 028 862
- DE-A- 1 917 661
- DE-A- 3 131 820
- DE-B- 2 044 608
- GB-A- 901 663
- GB-A- 1 205 560
- GB-A- 1 536 423
- GB-A- 2 127 742
- IT-A- 1 127 942
- US-A- 2 648 370
- US-A- 2 854 373
- US-A- 4 348 448

## Beschreibung

Die Erfindung betrifft eine brandbeständige sowie naßfeste Kunstharz-Schichtpreßstoffplatte gemäß Oberbegriff von Patentanspruch 1. Aus einer solchen Kunstharz-Schichtpreßstoffplatte können abgewinkelte Bauteile mit zumindest einem gerundeten Oberflächenbereich hergestellt werden.

In der Möbelindustrie sowie bei der Herstellung von dekorativen Strukturen ist in den letzten Jahren ein steigender Trend nach Formen zu beobachten, die gerundete Oberflächenbereiche aufweisen.

Für Strukturen dieser Art, die eine dekorative Oberfläche aufweisen, werden in zunehmendem Maße sogenannte Kunstharz-Schichtpreßstoffplatten der "Postforming" Qualität verwendet. Sie werden nachstehend Postforming-Platten genannt. Diese Platten bestehen aus mehreren miteinander heiß verpreßten, mit duroplastischen Kunstharzen wie Phenol- und Melaninharzen imprägnierten Trägerlagen, insbesondere Papierlagen, wobei diese Kunstharze nach dem Verpressen noch nicht völlig ausgehärtet sind, und können durch Erhitzen und Biegen über eine Schablone in ihre endgültige Form gebracht werden. Wegen der geringen Reißdehnung des imprägnierten Papiers sind dabei die erzielbaren Biegeradien nicht kleiner als etwa das 8-10 fache der Plattenstärke. Die Postforming-Platten haben - mit aus diesem Grunde - in der Praxis eine Stärke von 0,5 - 1,2 mm und können in diesen Stärken für die meisten Zwecke nicht selbsttragend eingesetzt, sondern müssen im allgemeinen zuerst gebogen und dann auf einen entsprechend geformten Träger, der meist aus Holz oder einer Holzspanplatte besteht, aufgeleimt werden.

Die AT-PS 349 766 beschreibt nun die Herstellung von Schichtstoff-Formteilen, welche die Form von gebogenen Platten mit wesentlich größerer Plattendicke (nämlich bis zu 10 mm Dicke und mehr) als die bekannten Postforming-Platten aufweisen und die demzufolge als mechanisch selbstragende Teile eingesetzt werden können.

Ebenso beschreibt die IT-B-1,127 942 ein Verfahren von sehr dicken gebogenen Schichtpreßstoffplatten auf der Basis einer Vielzahl von mit Phenol- oder Melaminharzen imprägnierten Papieren, wobei in den Formgebungsbereichen die Plattenstärke bis zu einem Wert von 1,2 mm oder geringer reduziert und die Biegung mit einer Heizrolle durchgeführt wird.

Bei der Herstellung dieser Schichtstoff-Formteile wird von einer heißverformbaren ebenen Kunstharz-Schichtpreßstoffplatte ausgegangen, welche aus mehreren Einzellamellen aufgebaut ist, von denen jede für sich aus einer oder mehreren mit duroplastischen Kunstharzen imprägnierten Trägerbahnen gebildet wird, sowie aus zwischen den Einzellamellen angeordneten Schichten aus thermoplastischen Bindemitteln. Die Herstellung der Formteile aus diesen Platten erfolgt mit Hilfe von geeigneten Biege- bzw. Formwerkzeugen bei einer über der Erweichungstemperatur des thermoplastischen Bindemittels liegenden Temperatur.

Die so hergestellten Schichtstoff-Formteile können sehr vielseitig verwendet werden. Für viele Anwendungsgebiete werden bei Kunstharz-Schichtpreßstoffplatten aber noch zusätzliche Eigenschaften gewünscht, die sich bei Postforming-Platten sowie bei den in der AT-PS 349 766 beschriebenen Platten nicht realisieren lassen. Dazu gehören insbesondere eine erhöhte Naßfestigkeit und eine erhöhte Brandbeständigkeit. Zur Erhöhung der Naßfestigkeit wird bei Schichtpreßstoffplatten auf Phenolharzbasis ein Harz eingesetzt, das niedermolekulare, höher reaktionsfähige Harzkomponenten als sonst enthält, welche mit den Fasern der als Trägerlagen eingesetzten Papiere beim Härten verstärkt reagieren, was eine spätere Nachformbarkeit solcher Platten ausschließt. Andererseits ist auch der Einsatz von Flammschutzmitteln zur Erhöhung der Brandbeständigkeit von Postforming-Platten in der Praxis deshalb nicht möglich, weil die bei Postforming-Platten gegenüber dem üblichen Schichtpreßstoffplatten bereits erhöhte Wasseraufnahme beim Einsatz von Flammschutzmitteln noch weiter auf unzulässig hohe Werte ansteigen würde.

Man ist daher dazu übergegangen, insbesondere für die Herstellung abgewinkelter Bauteile, Schichtpreßstoffplatten einzusetzen, welche in der Kernschicht Kunstharze ohne heißverformbare Eigenschaften, jedoch in den Oberflächenschichten Kunstharze mit heißverformbaren Eigenschaften aufweisen. Die Harze der Kernschicht erhöhen die Naßfestigkeit der Kunstharz-Schichtpreßstoffplatte und enthalten ein Flammschutzmittel, sodaß zusätzlich die Brandbeständigkeit der Platte gegeben ist. Dennoch zeigt diese den Nachteil, daß sich beim Heißverformen die Kunstharze der Kernschicht mit jenen der Oberflächenschichten vermischen, sodaß die Heißverformungseigenschaften der Oberflächenschichten stark reduziert sind.

Zusätzlich ist der Bereich zwischen Kern- und Oberflächenschichten für den Bearbeiter kaum sichtbar, was insbesondere beim Herstellungsverfahren von abgewinkelten Bauteilen zu Problemen führt. Der Erfindung liegt daher die Aufgabe zugrunde, brandbeständige sowie naßfeste Kunstharz-Schichtpreßstoffplatten gemäß Oberbegriff von Patentanspruch 1 anzugeben, welche in zufriedenstellender Weise durch Heißverformen beispielsweise zu abgewinkelten Bauteilen verarbeitet werden können.

Die Erfindung wird anhand der Patentansprüche gekennzeichnet.

Es folgt die Beschreibung von vorteilhaften Ausführungsbeispielen der Erfindung anhand der Figuren.

Gemäß einem bevorzugten Ausführungsbeispiel geht man bei der Herstellung der Kunstharz-Schichtpreßstoffplatte von folgenden Elementen aus
A Dekorpapiere mit einem Flächengewicht von 100g/m² imprägniert mit einem Melaminharz mit einem Harzauftrag von etwa 120 g/m²,
B Barriere-Papiere (180 g/m²) imprägniert mit einem Phenolharz mit einem Harzauftrag von ca. 70 g/m²,
C Kernpapiere (180 g/m²) imprägniert mit Phenolharz mit ca. 80 g/m² Harzauftrag,
   wobei bei diesen Elementen A bis C die zur Imprägnierung der Papiere verwendeten Harze "Postforming Harze" sind, und
D Kernpapiere (180 g/m²) imprägniert mit einem ein Flammschutzmittel auf Phosphatbasis enthaltenden Phenolharz, das kein Postforming-Harz ist, mit ca. 90 g/m² Harzauftrag.

Zur Herstellung einer ca. 10 mm dicken Schichtpreßstoffplatte werden Stapel gebildet, welche die Elemente A bis D in nachstehender Reihenfolge bzw. Anzahl enthalten:
A,B, 5xC, A, 37xD, A, 5xC, B, A.

Diese Stapel werden nun in einer bei der Herstellung von Postforming-Platten üblichen Weise während 20 min bei 130°C verpreßt.

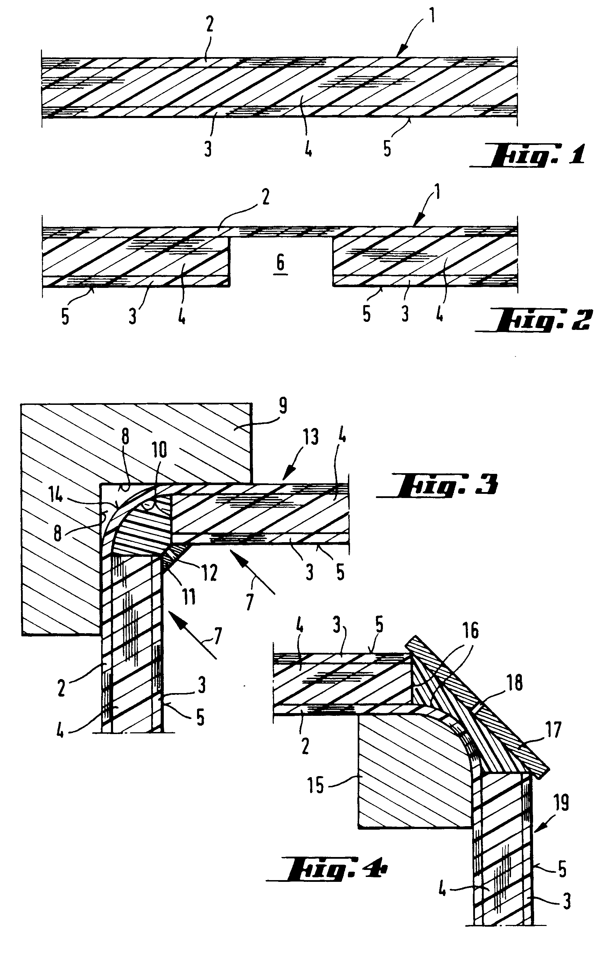

Fig. 1 zeigt den Aufbau einer solchen Kunstharz-Schichtpreßstoffplatte 1 schematisch im Schnitt mit den beiden heiß verformbaren Oberflächenschichten 2,3 gebildet aus den Elementfolgen A, B, 5xC und A bzw. (A, 5xC, B und A) und der aus 37 Kernpapieren aufgebauten Kernschicht 4.

Die anhand von Fig. 1 beschriebene Platte 1 hat eine Kernschicht 4, die ein Flammschutzmittel enthält. Obwohl die Oberflächenschichten 2, 3 kein Flammschutzmittel enthalten, ist das Brandverhalten der dieser Platte gegenüber einer aus der AT-PS 349 766 bekannten heiß verformbaren Platten wesentlich verbessert.

In diese Platte 1 wird nun von der Oberfläche 5 aus eine Nut mit rechteckigem Querschnitt (siehe Fig. 2) eingefräst, an welcher das Material der Oberflächenschicht 3 und der Kernschicht 4 abgetragen wird und nur die Oberflächenschicht 2 intakt bleibt. Die Platte 1 wird nun zumindest im Bereich der Nut 6 auf die Verformungstemperatur, die gewöhnlich zwischen 160 und 180°C liegt, gebracht und - wie in Fig. 3 schematisch im Schnitt dargestellt - an der Stelle der Nut 6 um 90° gebogen. Der gebogene Bereich wird dann in Richtung der Pfeile 7 an die Kontaktflächen 8 einer Formhalteschablone 9, die auf einer Temperatur von etwa 50 bis 80°C gehalten wird, angedrückt und dort festgehalten. Der durch das Biegen der Platte 1 verformte Nut-Raum 10 wird nun mit einer Verschlußleiste 11 abgeschlossen, wonach durch Öffnungen 12 in dieser Verschlußleiste 11 eine Polyurethangießmasse in den Raum 10 eingebracht wird, welche in kurzer Zeit so weit aushärtet, daß die Verschlußleiste 11 entfernt und der fertige Bauteil 13 von der Formhalteschablone 9 abgehoben werden können. Der Bauteil 13 weist nun an der Stelle seiner Abwinkelung einen konvex gerundeten Oberflächenbereich 14 auf, während seine Abwinkelung durch den eingebrachten Polyurethangießmasse mechanisch stabilisiert ist. Zm Ausfüllen des verformten Nut-Raumes 10 können auch Epoxydharze, Polyesterharze und dgl. eingesetzt werden. Ein anderer Weg zur mechanischen Stabilisierung der Abwinkelung besteht darin, daß man einen Profilstab, der etwa denselben Querschnitt wie der verformte Nut-Raum 10 aufweist, in diesen einklebt.

Aus einer mit einer Nut 6 versehenen Platte 1, wie sie in Fig. 2 dargestellt ist, kann nun auch ein Bauteil hergestellt werden, der an der Stelle der Abwinkelung einen konkav gerundeten Oberflächenbereich haben soll. Dazu wird eine solche mit einer Nut 6 versehene Platte 1 zuerst zumindest im Bereich dieser Nut 6 auf Verformungstemperatur gebracht und danach, wie in Fig. 4 schematisch dargestellt, un eine auf einer Temperatur von etwa 50 - 80°C gehaltene Biegeschablone 15 um 90°C abgewinkelt und dort festgehalten. Analog wie bei der anhand von Fig. 3 beschriebenen Verfahrensvariante wird der durch das Biegen der Platte 1 verformte Nut-Raum 16 mit einer Verschlußleiste 17 abgeschlossen und durch deren Öffnungen 18 in den Raum 16 eine Polyurethgießmasse eingebracht, die dann aushärtet. Nach Entfernung der Verschlußleiste 17 wird der fertige Bauteil 19 von der Biegeschablone 15 abgehoben.

Dieses Verfahren kann besonders dann eingesetzt werden, wenn an der Platte mehrere gegebenenfalls unterschiedliche Abwinkelungen vorgenommen werden sollen. In diesem Fall werden zuerst und gegebenenfalls gleichzeitig die für die Abwinkelungen erforderlichen Nuten in die Platte eingefräst, die Platte dann auf Verformungstemperatur gebracht, jeweils im Bereich der Nuten durch Biegen abgewinkelt und mit Hilfe einer Mehrfach-Formhalteschablone in dieser abgewinkelten Form festgehalten. Nun erfolgt dann das Einspritzen oder Eingießen der Polyurethangießmasse in die durch das Abwinkeln der Platte verformten Nuten-Räume.

Anstatt einer Nut mit rechteckigem Querschnitt können Nuten mit den verschiedensten Querschnittsformen vorgesehen werden, z.B solche, die sich nach dem Abwinkeln der Platte zu einem Querschnitt sehr kleiner Fläche verformen, bzw. bei denen Flankenbereiche der Nut nach erfogtem Abwinkeln einander berühren, wobei gegebenenfalls diese einander berührenden Flankenbereiche miteinander verklebt werden, wodurch die Abwinkelung der Platte mechanisch stabilisiert wird.

## Patentansprüche

1. Brandbeständige sowie naßfeste Kunstharz-SchichtpreßstoffPlatte, die aus mehreren miteinander heißverpreßten, aus mit duroplastischen Kunstharzen auf der Basis von Phenolharzen und gegebenenfalls Melaminharzen imprägnierten flächigen Trägermaterialien aufgebaut ist, wobei ein Teil der imprägnierten flächigen Trägermaterialien an zumindest einer Oberfläche der Kunstharz-Schichtpreßstoffplatte eine heißverformbare Oberflächenschicht (2, 3) bildet, welche von der Plattenoberfläche ausgehend jeweils eine Melaminharz enthaltende dekorative Decklage, eine Melaminharz oder Phenolharz enthaltende Barrierelage sowie mehrere Phenolharz enthaltende Kernlagen umfaßt, und daß die übrigen imprägnierten flächigen Trägermaterialien eine nichtverformbare Kernschicht (4) in einer Dicke von mindestens 2 mm bilden, welche ein Flammschutzmittel enthaltendes Phenolharz, das kein Postformingharz ist und das zu einer erhöhten Naßfestigkeit dieser Kernschicht führt, enthält, dadurch gekennzeichnet, daß an den Grenzen zwischen den heiß verformbaren Oberflächenschichten (2, 3) und der nicht verformbaren Kernschicht (4) jeweils zur Verhinderung einer Vermischung der Kunstharze dieser Oberflächenschichten (2, 3) mit dem der Kernschicht (4) ein gegebenenfalls mit Melaminharz imprägniertes Dekorpapier als Barrierelage vorgesehen ist.

2. Kunstharz-Schichtpreßstoffplatte nach Anspruch 1, dadurch gekennzeichnet, daß sie an beiden Oberflächen jeweils eine heiß verformbare Schicht (2, 3) enthält.

3. Kunstharz-Schichtpreßstoffplatte nach Anspruch 2, dadurch gekennzeichnet, daß die Schichtpreßstoffplatte mit Bezug auf die Mittelebene der Platte (1) in ihrer Zusammensetzung zumindest im wesentlichen symmetrisch aufgebaut ist.

4. Kunstharz-Schichtpreßstoffplatte nach einem der Ansprüche 1 bis 3, dadurch gekennzeichnet, daß die an ihren Oberflächen liegenden heiß verformbaren Schichten (2, 3) Dicken zwischen 0,5 und 2,0 mm haben.

## Claims

1. A fireproof and wet-strength synthetic resin laminated sheet, which is composed of a plurality of laminar support materials which are hot-compressed together and impregnated with duroplastic synthetic resins on the basis of phenol resins and optionally melamine resins, a Part of the impregnated laminar support materials forming a hot-deformable surface layer (2, 3) on at least one surface of the synthetic resin laminated sheet which, starting from the surface of the sheet, comprises in each case a decorative top layer containing melamine resin, a barrier layer containing melamine resin or phenol resin, and a plurality of core layers containing phenol resin, and that the other impregnated laminar support materials form a non-deformable core layer (4) in a thickness of at least 2 mm which contains a phenol resin containing flameproofing agent, which resin is not a post-forming resin and leads to an increased wet strength of this core layer, characterised in that a decorative paper optionally impregnated with melamine resin is provided as a barrier layer a the boundaries between the hot-deformable surface layers (2, 3) and the non-deformable core layer (4) in order to prevent, in each case, mixing of the synthetic resins of these surface layers (2, 3) with that of the core layer (4).

2. A synthetic resin laminated sheet according to claim 1, characterised in that it contains a hot-deformable layer (2, 3) on both surfaces.

3. A synthetic resin laminated sheet according to claim 2, characterised in that the composition of the laminated sheet is constructed at least essentially symmetrically with respect to the centre plane of the sheet (1).

4. A synthetic resin laminated sheet according to one of claims 1 to 3, characterised in that the hot-deformable layers (2, 3) located on its surfaces have thicknesses of between 0.5 and 2.0 mm.

## Revendications

1. Plaque stratifiée à base de résine synthétique, résistante au feu ainsi qu'à l'humidité, formée de plusieurs matériaux porteurs plats, comprimés à chaud les uns contre les autres, et imprégnés de résines thermodurcissables à base de résines phénoliques et le cas échéant de résines mélaminiques, dans laquelle une partie des matériaux porteurs plats imprégnés, au moins pour une surface de la plaque stratifiée à base de résine synthétique, forme une couche superficielle (2, 3) déformable à chaud qui, en partant de la surface de la plaque, comporte une couche décorative de couverture contenant de la résine mélaminique, une couche barrière contenant de la résine mélaminique ou de la résine phénolique, ainsi qu'une pluralité de couches centrales contenant de la résine phénolique, et en ce que les autres matériaux porteurs plats imprégnés forment, sur une épaisseur d'au moins 2 mm, une couche centrale indéformable (4), qui contient une résine phénolique comporte un moyen d'ignifugation qui n'est pas une résine à formation retardée et qui permet d'obtenir une résistance à l'humidité plus élevée de cette couche centrale, caractérisée en ce que, à la limite entre les couches extérieures thermoplastiques (2, 3) et la couche centrale (4) non thermoplastique, on dispose un papier décoratif, éventuellement imprégné de résine mélaminé, comme couche protectrice respectives pour empêcher le mélange de la résine synthétique desdites couches extérieures (2, 3) avec celle de la couche intérieure (4).

2. Plaque stratifiée à base de résine synthétique selon la revendication 1, caractérisée en ce qu'elle contient sur chacune de ses deux faces une couche (2, 3) déformable à chaud.

3. Plaque stratifiée à base de résine synthétique selon la revendication 2, caractérisée en ce que la plaque stratifiée est réalisée par rapport au plan médian de la plaque (1) avec une structure au moins sensiblement symétrique dans sa composition.

4. Plaque stratifiée à base de résine synthétique selon l'une des revendications 1 à 3, caractérisée en ce que les couches (2, 3) déformables à chaud disposées sur ses surfaces ont une épaisseur comprise entre 0,5 et 2,0 mm.
